# EUROPEAN PATENT SPECIFICATION

(11) **EP 2 094 951 B1**
(45) Date of publication and mention of the grant of the patent: **04.04.2012**
(21) Application number: 07848741.0
(22) Date of filing: 21.12.2007
(51) Int. Cl.: F01N 3/08, F01N 3/20, B01D 53/94

(54) **APPARATUS COMPRISING LEAN BURN IC ENGINE AND AN EXHAUST SYSTEM THEREFOR**
VORRICHTUNG MIT MAGERBETRIEB-VERBRENNUNGSMOTOR UND ABGASANLAGE DAFÜR
APPAREIL COMPRENANT UN MOTEUR À COMBUSTION INTERNE À MÉLANGE PAUVRE ET UN SYSTÈME D'ÉCHAPPEMENT POUR CELUI-CI

(30) Priority: 21.12.2006 US 876284 P; 22.12.2006 US 876970 P
(43) Date of publication of application: 02.09.2009
(73) Proprietor: Johnson Matthey PLC, London EC4A 4AB (GB)
(72) Inventor: CHEN, Haiying, Conshohocken, Pennsylvania 19428 (US); HESS, Howard Sherman III, Schwenksville, Pennsylvania 19473 (US); WALKER, Andrew Peter, Chester Springs, Pennsylvania 19425 (US)
(74) Representative: Nunn, Andrew Dominic
(86) International application number: PCT/GB2007/050781
(87) International publication number: WO 2008/075111

(56) References cited:
- WO-A-2004/061278
- US-A1- 2004 139 737
- US-A1- 2005 160 720
- US-B1- 6 375 910
- US-B1- 7 063 642

## Description

The present invention relates to an apparatus comprising a lean burn internal combustion engine, particularly diesel engines and particularly for vehicular applications, and an exhaust system for treating a flowing exhaust gas from the engine. In particular it relates to an apparatus comprising an exhaust system including a NOₓ adsorber catalyst (NAC) and a catalysed soot filter (CSF).

NAC are known e.g. from US patent no. 5,473,887 and are designed to adsorb nitrogen oxides (NOₓ) from lean exhaust gas (lambda >1) and to desorb the NOₓ when the oxygen concentration in the exhaust gas is decreased. Desorbed NOₓ may be reduced to N₂ with a suitable reductant, e.g. diesel fuel, promoted by a catalyst component, such as rhodium, of the NAC itself or located downstream of the NAC. In practice, the oxygen concentration is adjusted to a desired redox composition intermittently in response to a calculated remaining NOₓ absorption capacity of the NAC, e.g. richer than normal engine running operation (but still lean of stoichiometric or lambda = 1 composition), stoichiometric or rich of stoichiometric (lambda <1). The oxygen concentration can be adjusted by a number of means, e.g. throttling, injection of additional hydrocarbon fuel into an engine cylinder such as during the exhaust stroke or injecting hydrocarbon fuel directly into exhaust gas downstream of an engine manifold. More sophisticated common rail fuel injector systems in diesel engines can be used to meter very precise quantities of fuel to adjust exhaust gas composition.

A typical NAC formulation includes a catalytic oxidation component, such as platinum, a NOₓ-storage component, such as barium, and a reduction catalyst, e.g. rhodium. One mechanism commonly given for NOₓ-storage from a lean exhaust gas for this formulation is:

NO + ½ O₂ → NO₂ (1);

and

BaO + NO₂ + ½ O₂ → Ba(NO₃)₂ (2),

wherein in reaction (1), the nitric oxide reacts with oxygen on active oxidation sites on the platinum to form NO₂. Reaction (2) involves adsorption of the NO₂ by the storage material in the form of an inorganic nitrate.

At lower oxygen concentrations and/or at elevated temperatures, the nitrate species become thermodynamically unstable and decompose, producing NO or NO₂ according to reaction (3) below. In the presence of a suitable reductant, these nitrogen oxides are subsequently reduced by carbon monoxide, hydrogen and hydrocarbons to N₂, which can take place over the reduction catalyst (see reaction (4)).

Ba(NO₃)₂ → BaO + 2NO + ³/₂ O₂ or Ba(NO₃)₂ → BaO + 2NO₂ + ½ O₂ (3);

and

NO + CO → ½ N₂ + CO₂ (and other reactions) (4).

In the reactions of (1)-(4) above, the reactive barium species is given as the oxide. However, it is understood that in the presence of air most of the barium is in the form of the carbonate or possibly the hydroxide. The skilled person can adapt the above reaction schemes accordingly for species of barium other than the oxide.

A problem in the use of NAC, e.g. in diesel applications, is that diesel engine fuel also contains sulfur, and this is converted to sulfur dioxide (SO₂) during fuel combustion. SO₂ is oxidised to SO₃ by the oxidation catalyst component of the NAC and the SO₃ is adsorbed on the NOₓ adsorber by a similar mechanism to that of NO₂. Of course, there are a finite number of active sites on the NOₓ storage component for adsorbing the NOₓ and so the presence of sulfate on the NOₓ storage component reduces the capacity of the NOₓ storage component as a whole to adsorb NOₓ. Therefore, in order to retain sufficient NOₓ storage capability, sulfur must be periodically removed from the NAC. However, sulfates of NOₓ storage components such as barium are more stable than nitrates in lean exhaust gas and generally higher temperatures and/or richer conditions for longer periods are required than for desorbing NOₓ.

A significant problem with desulfating a NAC using richer than normal exhaust gas compositions is that the sulfate is removed as hydrogen sulfide. This compound has a characteristic and unpleasant rotten egg odor and accordingly it is desirable to prevent its emission to atmosphere.

This problem has been reduced to a certain extent in recent years because Ultra Low Sulfur Diesel (fuel of maximum sulfur content of 15 ppm (wt.)) is now becoming available in the US. In Europe, diesel fuel with a maximum sulfur limit of 50 ppm has been available since the beginning of 2005 and also "sulfur-free" 10ppm sulfur diesel fuel has been available in Sweden since 1991 and more recently in Denmark and UK. As a result, NAC desulfation procedures are required less often.

CSFs are known from, e.g. US Patent 5,100,632. Generally, CSFs are used with mixed passive-active regeneration, wherein the filter regenerates passively under some operating conditions, e.g. at high engine loads. Under other operating conditions, e.g. light load operation, the exhaust gas temperature is actively increased - typically to about 550-600°C - to trigger periodic regeneration whenever a given soot load is reached in the filter (detected e.g. using a backpressure sensor) or after the vehicle has travelled a pre-determined distance. Increased temperatures are realized through such means as engine management or injection of fuel into the exhaust gas, followed by HC oxidation over a warm-up catalyst (which may be on the CSF itself).

A diesel exhaust system comprising a NAC and a downstream CSF is known e.g. from SAE 2001-01-2065 entitled "Cummins Light Truck Diesel Engine Progress Report".

WO 01/12320 discloses a wall-flow filter for an exhaust system of an internal combustion engine, which wall-flow filter comprising an oxidation catalyst on a substantially gas impermeable zone at an upstream filter end. Optionally, a NOₓ absorber can be located in a substantially gas impermeable zone at a downstream filter end.

US Patent 7,063,642 discloses concepts in which a transmission, preferably a continuously variable transmission (CVT), is used to facilitate the operation of an exhaust aftertreatment system. The exhaust aftertreatment system is taught to include a controller, a fuel injector, a lean NOₓ catalyst, a reformer, a diesel particulate filter (DPF), a lean NOx-trap (LNT), an ammonia-SCR catalyst, and a clean-up catalyst.

There remains a need for an exhaust system for a lean burn internal combustion engine, particularly for a diesel engine, that emits carbonaceous soot particles and NOₓ, which exhaust system integrates NAC functionality with means for treating such carbonaceous soot particles and enables NAC desulfation optionally under rich conditions whilst reducing or preventing H₂S emissions. We have investigated exhaust systems for lean burn internal combustion engines comprising both a NAC and a CSF and have now devised an arrangement that meets such needs.

According to one aspect, the invention provides an apparatus comprising:
(i) a lean burn internal combustion engine;
(ii) an exhaust system for treating a flowing exhaust gas from the engine, which system comprising: (a) a first substrate monolith comprising a NOₓ adsorber catalyst (NAC); (b) a catalysed soot filter (CSF) comprising a filter substrate comprising platinum group metal oxidation catalyst components and a compound effective to remove and/or convert at least some hydrogen sulfide in enriched exhaust gas, which filter substrate having an inlet end and an outlet end, wherein the inlet end of the filter substrate is located downstream of the first substrate monolith in a flow direction of the exhaust gas; and
(iii) means for enriching the exhaust gas to provide an enriched exhaust gas composition intermittently during normal lean running operation for removing sulfate adsorbed on the NAC,
wherein the filter substrate has a length extending from the inlet end to the outlet end thereof, wherein the compound effective to remove and/or convert at least some hydrogen sulfide is located in a zone of substantially uniform length defined at an upstream end by a point more than one half way along the filter substrate length measured from the inlet end and defined at a downstream end by the outlet end of the filter substrate itself and wherein the compound effective to remove and/or convert at least some hydrogen sulfide is effective to remove and/or convert at least some hydrogen sulfide derived from removing sulfate adsorbed on the NAC.

By "enriched" herein, we mean "relative to normal running operation". The enriched exhaust gas composition may therefore be net lean of stoichiometry (i.e. lambda>1), net stoichiometric (lambda =1) or net rich (lambda <1), wherein lambda = actual air-to-fuel ratio/stoichiometric air-to-fuel ratio. Preferably, however, the enriched state is net rich, i.e. lambda <1.

The filter substrate can be any suitable for the purpose of trapping and retaining diesel particulate matter, including wall-flow filters, sintered metal filters and partial filters such as those disclosed in EP 1276549 and EP 1057519. The first substrate monolith can be a flow-through monolith substrate or a filter substrate, such as a partial filter substrate.

The CSF catalyst can be any suitable for the purpose including platinum and/or palladium supported on a suitable support material including alumina and ceria or a mixed oxide or composite oxide of ceria and zirconia.

Typically, the NAC will comprise a catalytic oxidation component, such as platinum, palladium or both platinum and palladium, a NOₓ-storage component, such as an alkaline earth metal oxide, an alkali metal oxide or an oxide of a lanthanide metal, e.g. ceria, lanthana, yttria or mixtures of any two or more of such oxides, and a reduction catalyst, e.g. rhodium, although the rhodium may be located on outlet channels of the filter or downstream of the filter entirely e.g. located on a flow-through substrate downstream. Whilst the NAC is typically applied as a washcoat onto a honeycomb monolith substrate, it is also possible to provide the first substrate monolith as an extruded-type honeycomb. Where the NAC is present as an extrudate, it is possible to coat other catalyst coatings onto the extrudate to combine catalyst functionality in a single "brick".

Desirably, the enriching means comprises a microprocessor (ECU), which can comprise part of an engine control unit.

According to the invention, the filter substrate has an inlet end and an outlet end and the inlet end of the filter substrate is located downstream of the first substrate monolith in a flow direction of the exhaust gas. The compound effective to remove and/or convert at least some hydrogen sulfide can also be located on a third substrate monolith disposed between the first substrate monolith and the filter substrate and/or the first substrate monolith can also comprise both the NAC and the compound effective to remove and/or convert at least some hydrogen sulfide. In an embodiment according to the latter arrangement, the first substrate monolith has a length extending between an inlet end and an outlet end thereof, wherein the NAC is located in a first zone of substantially uniform length defined at an upstream end by the inlet end of the first substrate monolith and at a downstream end by a point more than one half way along the first substrate monolith measured length from the inlet end and the compound effective to remove and/or convert at least some hydrogen sulfide is located in a second zone of substantially uniform length defined at an upstream end by the NAC and at a downstream end by the outlet end of the first substrate monolith.

According to the invention, the filter substrate comprises the compound effective to remove and/or convert at least some hydrogen sulfide. In particular, the filter substrate has a length extending from an inlet end to an outlet end thereof, wherein the compound effective to remove and/or convert at least some hydrogen sulfide is located in a zone of substantially uniform length defined at an upstream end by a point more than one half way along the filter substrate length measured from the inlet end and defined at a downstream end by the outlet end of the filter substrate itself

In addition to the or each location for the compound effective to remove and/or convert at least some hydrogen sulfide disclosed hereinabove a fourth substrate monolith comprising the compound effective to remove and/or convert at least some hydrogen sulfide may be disposed downstream of the filter substrate.

In summary, in addition to the location on the filter substrate defined in claim 1, the compound effective to remove and/or convert at least some hydrogen sulfide can be located at one of the following positions in the exhaust system:
(1) between the NAC and the filter substrate;
(2) on the first substrate downstream of the NAC;
(3) between the filter substrate and an exhaust system exit to atmosphere; and
(4) at both positions (1) and (2).

The exhaust system can comprise an oxidation catalyst disposed between the engine and the NAC. The oxidation catalyst can oxidize unburned hydrocarbons and soluble organic fraction hydrocarbons adsorbed on diesel soot particles and carbon monoxide in the exhaust gas. The composition of such oxidation catalysts is well known in the art and includes, for example, US patent no. 5,491,120. The oxidation catalyst can also be formulated to oxidize nitrogen oxide in addition to oxidizing HCs and CO. Generally, DOCs are coated on a flow-through monolith substrate, but they may also be coated on a diesel particulate filter to form a catalysed soot filter (CSF).

In one set of embodiments, the oxidation catalyst can be located on a separate substrate monolith disposed between the engine and the first substrate monolith.

Alternatively, wherein the first substrate monolith has a length extending between an inlet end and an outlet end thereof, the oxidation catalyst can be located in a zone of substantially uniform length defined at an upstream end by the inlet end of the first substrate monolith and at a downstream end by the NAC, i.e. a zone comprising the NAC may be defined at an upstream end by the downstream end of the zone comprising the oxidation catalyst.

The means for enriching the exhaust gas can comprise an engine management unit configured intermittently to cause the engine to emit an enriched exhaust gas. Alternatively, or additionally, it can comprise an injector for injecting a reductant into a flowing exhaust gas carried by the exhaust system downstream of the engine. Alternatively or additionally, the exhaust gas can be enriched with hydrogen and carbon monoxide formed e.g. by feeding engine fuel and a portion of exhaust gas into a reformer catalyst and then feeding the resulting mixture back into the exhaust gas upstream of the NAC. Catalysts suitable for this reaction are known as reforming catalysts, illustrative examples of which include catalysts based on platinum group metals (PGMs) and nickel (Ni). For further details, reference can be made to D.L. Trimm and Z.I. Onsan in Catalysis Reviews - Science and Engineering, vol. 43 (2001) pp 31-84.

Further suitable preforming catalysts with utility according to this embodiment of the invention include up to 2wt%, e.g. 1wt%, rhodium dispersed on a refractory oxide support material which comprises cations of cerium and zirconium - see for example our WO 99/48805. In addition to the supported up to 2wt% Rh, such as up to 1 wt% Rh, other catalysts include low loadings of Pt (up to 0.5wt%, e.g. 0.1 wt%) and Rh-Pt comprising up to 2wt% Rh (e.g. up to 1wt% Rh) and up to 0.5wt% Pt (e.g. up to 0.1wt%). Supports for the Rh, Pt, Rh-Pt and Ni include alumina, titania, ceria, zirconia, silica, silica-alumina and mixtures and mixed oxides containing any two or more thereof.

The hydrogen sulfide removing and/or adsorbing compound can be any material capable of storing and/or converting hydrogen sulfide under rich conditions. In one embodiment, the hydrogen sulfide removing and/or converting compound is selected from the group consisting of NiO, CaO, Fe₂O₃ and BaO.

The adsorption of H₂S in a hydrogen sulfide removing and/or converting compound is illustrated in reaction (5) and the desorption in lean conditions is illustrated in reaction (6):

2H₂S + NiO + ½O₂ → NiS₂ + 2H₂O (5)

NiS₂ + 2½O₂ → NiO + 2SO₂ (6)

Whilst the hydrogen sulfide removing and/or converting compound may coexist with platinum group metal oxidation catalyst components, e.g. platinum and/or palladium, of the NAC and/or the CSF, the preferred compound, NiO, can poison the hydrocarbon and carbon monoxide activity of the PGM catalyst. Hence, it is desirable to segregate such hydrogen sulfide removing and/or converting compound by locating the materials in separate discreet zones or substrates.

The enriching means can comprise means for controlling a temperature of the NAC during enrichment to remove sulfate from the NAC.

In one embodiment, wherein the enriching means provides a net rich exhaust gas composition (lambda <1), the temperature controlling means comprises means for intermittently adjusting the exhaust gas composition to the lean side (lambda >1) during exhaust gas enrichment to remove sulfate adsorbed on the NAC. Such means for intermittently adjusting the exhaust gas composition to the lean side (lambda >1) can control: an engine air-to-fuel ratio; an injector for injecting air into exhaust gas downstream of the engine; and/or supply of diesel fuel and exhaust gas to a reforming catalyst. This has the additional benefit that sulfur stored on the hydrogen sulfide removing and/or converting compound is released as sulfur dioxide, which can be emitted to atmosphere as such, particularly where the hydrogen sulfide removing and/or converting compound is located on the downstream end of the CSF or on a separate substrate monolith disposed downstream of the CSF. Sulfur dioxide released upstream of the CSF can be oxidised to sulfur trioxide on the CSF catalyst, which sulfur trioxide when combined with water (steam) in the exhaust gas can form fine particles of sulfuric acid that can contribute to total particulates detected in a test cycle for meeting a relevant emission standard.

In practice, contacting the NAC with a rich exhaust gas composition followed by a lean exhaust gas can be accomplished in a cyclical fashion or a non-cyclical manner, e.g. controlled by negative feedback so that the NAC is maintained within a desired temperature window to effect optimum desulfation whilst limiting any hydrothermal deactivation of the NAC itself.

The lean burn internal combustion engine can be a diesel engine such as a light-duty diesel engine or a heavy duty diesel engine, as defined by relevant legislation. However, it may also be a gasoline lean burn engine, as desired.

According to a second aspect, the invention provides a vehicle comprising an apparatus according to the invention.

According to a third aspect, the invention provides a method of desulfating a NOx adsorber catalyst (NAC) in an exhaust system of a lean burn internal combustion engine comprising a first substrate monolith comprising a NOx adsorber catalyst (NAC); and a catalysed soot filter (CSF) comprising a filter substrate comprising platinum group metal oxidation catalyst components and a compound effective to remove and/or convert at least some hydrogen sulfide in enriched exhaust gas, which filter substrate having an inlet end and an outlet end, wherein the inlet end of the filter substrate is located downstream of the first substrate monolith in a flow direction of the exhaust gas, wherein the filter substrate has a length extending from the inlet end to the outlet end thereof, wherein the compound effective to remove and/or convert at least some hydrogen sulfide is located in a zone of substantially uniform length defined at an upstream end by a point more than one half way along the filter substrate length measured from the inlet end and defined at a downstream end by the outlet end of the filter substrate itself, which method comprising the steps of:
(i)contacting sulfated NAC with enriched exhaust gas for a time and at a temperature sufficient to desorb sulfur-containing species adsorbed thereon, thereby to generate hydrogen sulfide; and
(ii) contacting exhaust gas containing hydrogen sulfide with the compound effective to remove and/or convert at least some hydrogen sulfide from the rich exhaust gas.

In one embodiment, the method comprises the step of releasing sulfur dioxide from the compound effective to remove and/or convert at least some hydrogen sulfide from the rich exhaust gas by intermittently contacting said compound with a lean exhaust gas during step (i).

In order that the invention may be more fully understood, an embodiment whereof will now be described with reference to the accompanying drawings, in which:
Figure 1 is schematic diagram showing a first embodiment of an apparatus according to the invention;
Figure 2 is a schematic diagram showing an apparatus not according to the invention; and
Figure 3 is a graph showing H₂S and SO₂ detected downstream during a rich/lean cycle regime over a 33% NiO/Al₂O₃ cordierite catalyst powder sample tested in a synthetic catalyst activity test (SCAT) apparatus.

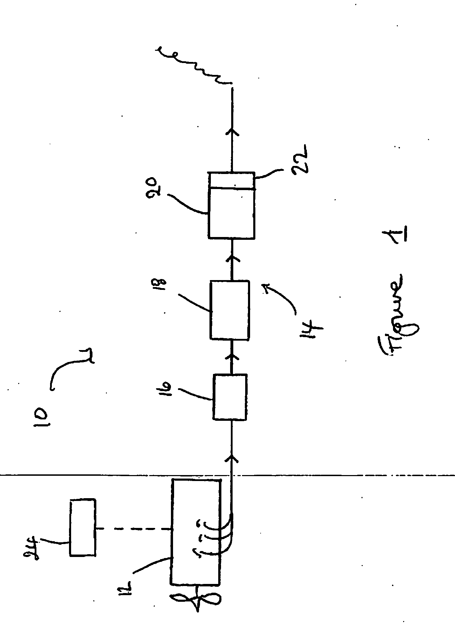

Figure 1 shows an apparatus 10 comprising a fuel injected turbo diesel engine 12 and an exhaust system 14 comprising a diesel oxidation catalyst (DOC) 16 located downstream of the turbo (turbo not shown) followed in turn in the flow direction (indicated by arrows) by a NOₓ adsorber catalyst ((NAC) 18, and a catalysed soot filter (CSF), 20, wherein the filter substrate is a partial filter as described in EP 1276549. Located in a discreet zone 22 on the outlet end of the partial filter is a washcoat comprising nickel (under rich conditions, the nickel may be present as nickel metal and possibly the carbonate under lean running conditions. Therefore, by "comprising nickel" we mean a nickel compound) for adsorbing hydrogen sulfide in rich exhaust gas. Each of the DOC and NAC are coated on a flow-through ceramic substrate monolith.

In ordinary operation, engine control unit 24 comprising a microprocessor controls the engine's fuel injection regime intermittently (e.g. 2-3 minutes) to enrich the exhaust gas in the exhaust system momentarily (e.g. up to a few seconds) during normal lean running operation when it is determined that the capacity of NAC 18 to adsorb NOₓ is reduced and requires regeneration.

Over the course of e.g. a few thousand miles of vehicle service, sulfur in the fuel and lubrication oil can become adsorbed on the NAC, reducing the finite capacity of the NAC to adsorb NOₓ. When it is determined that the NAC should be desulfated, the engine control unit instigates a desulfation regime, e.g. of up to 10 minutes duration, wherein the engine fuel injection is controlled to make the exhaust gas rich (lambda <1). Combustion of unburned hydrocarbons and CO on DOC 16 and the oxidation catalyst component of the NAC 18 itself raises the temperature of the NAC to temperatures at which sulfur is removed from the NAC as hydrogen sulfide in rich exhaust gas. At least some hydrogen sulfide is removed from the exhaust gas contacting the nickel-containing washcoat component in zone 22 on the downstream end of filter 20.

In order to regenerate the hydrogen sulfide adsorber at zone 22 by releasing stored sulfur as sulfur dioxide and to prevent excessive hydrothermal damage to the NAC, the exhaust gas composition is controlled during the desulfation regime to return briefly to the lean side (lambda >1). In the present embodiment, lean exhaust gas composition is obtained by controlling the engine air-to-fuel ratio by means of engine control unit 24. However, lean exhaust gas can also be obtained by providing an injector for injecting air into the exhaust gas downstream of the engine controlled by engine control unit 24.

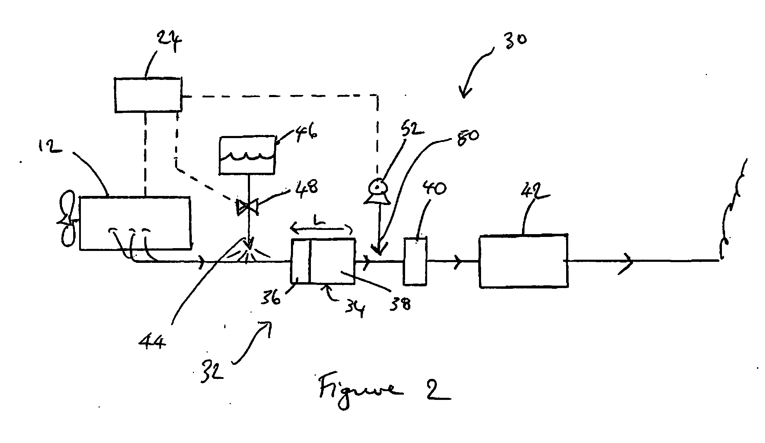

Figure 2 shows an alternative apparatus not according to the invention, wherein like numbered components refer to identical components as disclosed in connection with Figure 1. Apparatus 30 comprises exhaust system 32, wherein 34 is a flow-through ceramic substrate monolith coated from an inlet end to less than half way of the entire length "L" thereof with an oxidation catalyst composition in zone 36 and with a NAC composition in a zone 38 defined at an upstream end by zone 36 and at a downstream end by an outlet end of the monolith substrate. Downstream of substrate monolith 34 is a separate, relatively short flow-through substrate monolith 40 coated with a calcium oxide-based hydrogen sulfide adsorber composition. Downstream of substrate monolith 40 is a CSF comprising a ceramic wall-flow filter substrate.

Reference numeral 44 refers to a fuel injector arranged to inject a supply of hydrocarbon reductant from reservoir 46 into exhaust gas flowing in the exhaust system 30 between engine 12 and substrate monolith 34. Flow of reductant to an injector nozzle is controlled by actuator 48, which is in turn controlled by engine control unit 24. Air injector 50 is provided to inject air into exhaust gas flowing in the exhaust system 30 between substrate monolith 34 and the hydrogen sulfide adsorber-coated monolith substrate 40. Air injection is actuated by air pump 52, which is controlled by the engine control unit 24.

The use of the apparatus shown in Figure 2 is very similar to that described hereinabove in relation to the first embodiment (shown in Figure 1) except in that exhaust gas enrichment for the purposes of NAC regeneration and NAC desulfation is done using fuel injector 44 and the redox composition of the exhaust gas for preventing the NAC overheating and for regenerating the hydrogen sulfide adsorber is done by controlling the interaction of actuator 48 and air pump 52 and thereby the ingress of reducing components and air into the exhaust gas. No further specific description is deemed necessary.

The following Example is provided by way of illustration only.

### EXAMPLE

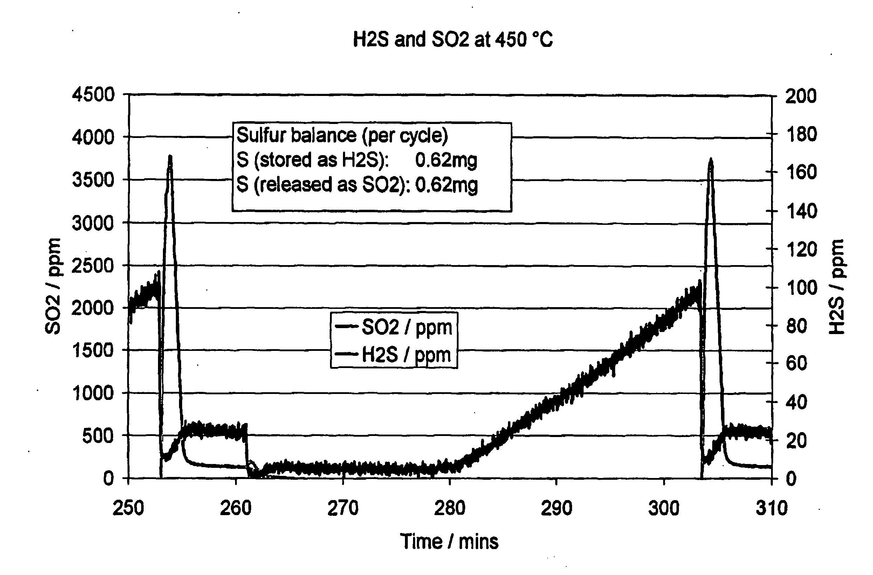

0.01g powdered 33% NiO/Al₂O₃ catalyst prepared by calcining particulate Al₂O₃ impregnated with an appropriate concentration of aqueous nickel nitrate in air at 650°C for 2 hours was combined with the same weight of powdered cordierite. The resulting powder mixture was exposed in a Synthetic Catalyst Activity Test (SCAT) apparatus repeatedly to a rich gas mixture of 140 ppm H₂S, 1% H₂, balance He/N₂ for 41.7 minutes followed by a lean gas mixture of 0.8% O₂, balance He for 8.3 minutes. Figure 3 shows the detected SO₂ and H₂S content of gas downstream of the catalyst over a repeat cycle at 450°C. It can be seen from the Figure that the mass balance between sulphur stored as NiS₂ is the same as the amount emitted as SO₂ immediately after the inlet gas mixture is switched from rich to lean.The experiment was repeated at 550°C and 650°C, with similar results. By the end of the test the same sample had been cycled for >35 hours with no loss in adsorb/desorb activity.

## Claims

1. An apparatus (10) comprising:
(i) a lean burn internal combustion engine (12);
(ii) an exhaust system (14) for treating a flowing exhaust gas from the engine, which system comprising:
(a) a first substrate monolith comprising a NOₓ adsorber catalyst (NAC) (18);
(b) a catalysed soot filter (CSF) (20) comprising a filter substrate comprising platinum group metal oxidation catalyst components and a compound effective to remove and/or convert at least some hydrogen sulfide in enriched exhaust gas, which filter substrate having an inlet end and an outlet end, wherein the inlet end of the filter substrate is located downstream of the first substrate monolith in a flow direction of the exhaust gas; and
(iii) means (24) for enriching the exhaust gas to provide an enriched exhaust gas composition intermittently during normal lean running operation for removing sulfate adsorbed on the NAC,
wherein the filter substrate has a length extending from the inlet end to the outlet end thereof, wherein the compound effective to remove and/or convert at least some hydrogen sulfide is located in a zone (22) of substantially uniform length defined at an upstream end by a point more than one half way along the filter substrate length measured from the inlet end and defined at a downstream end by the outlet end of the filter substrate itself and wherein the compound effective to remove and/or convert at least some hydrogen sulfide is effective to remove and/or convert at least some hydrogen sulfide derived from removing sulfate adsorbed on the NAC.

2. An apparatus according to claim 1, wherein another substrate monolith comprising the compound effective to remove and/or convert at least some hydrogen sulfide is disposed downstream of the filter substrate.

3. An apparatus according to claim 1 or 2, wherein the exhaust system (14) comprises an oxidation catalyst (16) disposed between the engine and the NAC.

4. An apparatus according to claim 1, 2 or 3, wherein the means (24) for enriching the exhaust gas is selected from the group consisting of:
(a) an engine management unit configured intermittently to cause the engine to emit an enriched exhaust gas;
(b) an injector (44) for injecting a reductant into a flowing exhaust gas carried by the exhaust system (14) downstream of the engine; and
(c) a reforming catalyst for generating a gas mixture comprising H₂ and CO from exhaust gas and diesel fuel.

5. An apparatus according to any preceding claim, wherein the hydrogen sulfide removing and/or converting compound is selected from the group consisting of NiO, CaO, Fe₂O₃ and BaO.

6. An apparatus according to any preceding claim, wherein the enriching means (24) comprises means for controlling a temperature of the NAC during enrichment to remove and/or convert sulfate from the NAC.

7. An apparatus according to claim 6, wherein the enriching means (24) provides a net rich exhaust gas composition (lambda <1) and wherein the temperature controlling means comprises means for intermittently adjusting the exhaust gas composition to the lean side (lambda >1) during exhaust gas enrichment to remove and/or convert sulfate adsorbed on the NAC.

8. An apparatus according to claim 7, wherein the means for intermittently adjusting the exhaust gas composition to the lean side (lambda >1) controls one or both of: an engine air-to-fuel ratio; and an injector (50) for injecting air into exhaust gas downstream of the engine.

9. An apparatus according to any preceding claim, wherein the enriching means (24) comprises a microprocessor (ECU).

10. An apparatus according to any preceding claim, wherein the lean burn internal combustion engine (12) is a diesel engine, optionally a heavy duty diesel engine.

11. A vehicle comprising an apparatus (10) according to any preceding claim.

12. A method of desulfating a NOₓ adsorber catalyst (NAC) (18) in an exhaust system (14) of a lean burn internal combustion engine (12) comprising a first substrate monolith comprising a NOₓ adsorber catalyst (NAC) (18); and a catalysed soot filter (CSF) (20) comprising a filter substrate comprising platinum group metal oxidation catalyst components and a compound effective to remove and/or convert at least some hydrogen sulfide in enriched exhaust gas, which filter substrate having an inlet end and an outlet end, wherein the inlet end of the filter substrate is located downstream of the first substrate monolith in a flow direction of the exhaust gas, wherein the filter substrate has a length extending from the inlet end to the outlet end thereof, wherein the compound effective to remove and/or convert at least some hydrogen sulfide is located in a zone (22) of substantially uniform length defined at an upstream end by a point more than one half way along the filter substrate length measured from the inlet end and defined at a downstream end by the outlet end of the filter substrate itself, which method comprising the steps of:
(i) contacting sulfated NAC with enriched exhaust gas for a time and at a temperature sufficient to desorb sulfur-containing species adsorbed thereon, thereby to generate hydrogen sulfide; and
(ii) contacting exhaust gas containing hydrogen sulfide with the compound effective to remove and/or convert at least some hydrogen sulfide from the rich exhaust gas.

13. A method according to claim 12, comprising the step of releasing sulfur dioxide from the compound effective to remove and/or convert at least some hydrogen sulfide from the enriched exhaust gas by intermittently contacting said compound with a leaner exhaust gas during step (i).

## Patentansprüche

1. Vorrichtung umfassend:
(i) einen Verbrennungsmotor mit magerer Verbrennung;
(ii) ein Abgassystem zur Behandlung eines strömenden Abgases aus dem Motor, wobei das System Folgendes umfasst:
(a) einen ersten Substratmonolithen, der einen NOₓ-Speicherkatalysator (NAC) umfasst;
(b) einen katalytischen Rußfilter (CSF), der ein Filtersubstrat umfasst, das Platingruppenmetall-Oxidationskatalysator-Komponenten und eine Verbindung, die wirksam zumindest einen Teil des Schwefelwasserstoffs in angereichertem Abgas entfernt und/oder umwandelt, umfasst, wobei das Filtersubstrat ein Einlassende und ein Auslassende aufweist, wobei das Einlassende des Filtersubstrats stromabwärts des ersten Substratmonolithen in einer Strömungsrichtung des Abgases angeordnet ist; und
(iii) ein Mittel zur Anreicherung des Abgases, um intermittierend eine angereicherte Abgaszusammensetzung während des normalen Magerbetriebs bereitzustellen, um das auf dem NAC gespeicherte Sulfat zu entfernen,
wobei das Filtersubstrat eine sich vom Einlassende zum Auslassende davon erstreckende Länge aufweist, wobei die Verbindung, die wirksam zumindest einen Teil des Schwefelwasserstoffs entfernt und/oder umwandelt, in einer Zone von im Wesentlichen gleichmäßiger Länge angeordnet ist, die an einem stromaufwärtigen Ende durch einen Punkt definiert ist, der sich um mehr als die halbe Strecke entlang der Filtersubstratlänge vom Einlassende aus gemessen entfernt befindet, und an einem stromabwärtigen Ende durch das Auslassende des Filtersubstrats selbst definiert ist, und wobei die Verbindung, die wirksam zumindest einen Teil des Schwefelwasserstoffs entfernt und/oder umwandelt, wirksam zumindest einen Teil des Schwefelwasserstoffs entfernt und/oder umwandelt, der aus dem Entfernen des auf dem NAC gespeicherten Sulfats stammt.

2. Vorrichtung nach Anspruch 1, wobei ein anderer Substratmonolith, der die Verbindung umfasst, die wirksam zumindest einen Teil des Schwefelwasserstoffs entfernt und/oder umwandelt, stromabwärts des Filtersubstrats angeordnet ist.

3. Vorrichtung nach Anspruch 1 oder 2, wobei das Abgassystem einen Oxidationskatalysator umfasst, der zwischen dem Motor und dem NAC angeordnet ist.

4. Vorrichtung nach Anspruch 1, 2 oder 3, wobei das Mittel zur Anreicherung des Abgases ausgewählt ist aus der Gruppe bestehend aus:
(a) einer Motormanagementeinheit, die dafür konfiguriert ist, den Motor intermittierend dazu zu veranlassen, ein angereichertes Abgas auszustoßen;
(b) einer Einspritzdüse zum Einspritzen eines Reduktionsmittels in ein strömendes Abgas, das von dem Abgassystem stromabwärts des Motors geführt wird; und
(c) einem Reformierkatalysator zur Erzeugung eines Gasgemischs, das H₂ und CO aus Abgas und Dieselkraftstoff umfasst.

5. Vorrichtung nach irgendeinem vorangehenden Anspruch, wobei die Verbindung, die den Schwefelwasserstoff entfernt und/oder umwandelt, aus der Gruppe bestehend aus NiO, CaO, Fe₂O₃ und BaO ausgewählt ist.

6. Vorrichtung nach irgendeinem vorangehenden Anspruch, wobei das Anreicherungsmittel ein Mittel zur Regelung einer Temperatur des NAC während der Anreicherung umfasst, um das Sulfat von dem NAC zu entfernen und/oder umzuwandeln.

7. Vorrichtung nach Anspruch 6, wobei das Anreicherungsmittel eine rein fette Abgaszusammensetzung (Lambda <1) bereitstellt und wobei das Temperaturregelmittel ein Mittel zur intermittierenden Umstellung der Abgaszusammensetzung zur Magerseite (Lambda >1) während der Abgasanreicherung umfasst, um das auf dem NAC gespeicherte Sulfat zu entfernen und/oder umzuwandeln.

8. Vorrichtung nach Anspruch 7, wobei das Mittel zur intermittierenden Umstellung der Abgaszusammensetzung zur Magerseite (Lambda >1) eines oder beides von Folgendem steuert: ein Luft-Kraftstoff-Gemisch des Motors; und eine Einspritzdüse zum Einspritzen von Luft in das Abgas stromabwärts des Motors.

9. Vorrichtung nach irgendeinem vorangehenden Anspruch, wobei das Anreicherungsmittel einen Mikroprozessor (ECU) umfasst.

10. Vorrichtung nach irgendeinem vorangehenden Anspruch, wobei der Verbrennungsmotor mit magerer Verbrennung ein Dieselmotor, gegebenenfalls ein Nutzfahrzeug-Dieselmotor, ist.

11. Fahrzeug umfassend eine Vorrichtung nach irgendeinem vorangehenden Anspruch.

12. Verfahren zur Desulfatierung eines NO"-Speicherkatalysators (NAC) in einem Abgassystem eines Verbrennungsmotors mit magerer Verbrennung, das Folgendes umfasst: einen ersten Substratmonolithen, der einen NOₓ-Speicherkatalysator (NAC) umfasst; und einen katalytischen Rußfilter (CSF), der ein Filtersubstrat umfasst, das Platingruppenmetall-Oxidationskatalysator-Komponenten und eine Verbindung, die wirksam zumindest einen Teil des Schwefelwasserstoffs in angereichertem Abgas entfernt und/oder umwandelt, umfasst, wobei das Filtersubstrat ein Einlassende und ein Auslassende aufweist, wobei das Einlassende des Filtersubstrats stromabwärts des ersten Substratmonolithen in einer Strömungsrichtung des Abgases angeordnet ist, wobei das Filtersubstrat eine sich vom Einlassende zum Auslassende davon erstreckende Länge aufweist, wobei die Verbindung, die wirksam zumindest einen Teil des Schwefelwasserstoffs entfernt und/oder umwandelt, in einer Zone von im Wesentlichen gleichmäßiger Länge angeordnet ist, die an einem stromaufwärtigen Ende durch einen Punkt definiert ist, der sich um mehr als die halbe Strecke entlang der Filtersubstratlänge vom Einlassende aus gemessen entfernt befindet, und an einem stromabwärtigen Ende durch das Auslassende des Filtersubstrats selbst definiert ist, wobei das Verfahren folgende Schritte umfasst:
(i) Inkontaktbringen des sulfatierten NAC mit angereichertem Abgas für einen Zeitraum und bei einer Temperatur, die für die Desorption von darauf gespeicherten schwefelhaltigen Spezies ausreichen, um dadurch Schwefelwasserstoff zu erzeugen; und
(ii) Inkontaktbringen von Schwefelwasserstoff enthaltendem Abgas mit der Verbindung, die wirksam zumindest einen Teil des Schwefelwasserstoffs aus dem fetten Abgas entfernt und/oder umwandelt.

13. Verfahren nach Anspruch 12, umfassend den Schritt zur Freisetzung von Schwefeldioxid aus der Verbindung, die wirksam zumindest einen Teil des Schwefelwasserstoffs aus dem angereicherten Abgas entfernt und/oder umwandelt, durch intermittierendes Inkontaktbringen der Verbindung mit einem magereren Abgas während des Schritts (i).

## Revendications

1. Appareil comprenant :
(i) un moteur à combustion interne à mélange pauvre ;
(ii) un système d'échappement pour traiter les gaz d'échappement s'écoulant à partir du moteur, ledit système comprenant :
(a) un premier monolithe faisant office de substrat comprenant un catalyseur adsorbant les NOₓ (NAC) ;
(b) un filtre de la suie catalysée (CSF) comprenant un substrat filtrant comprenant un composant à base d'un métal du groupe du platine faisant office de catalyseur d'oxydation et un composé efficace pour éliminer et/ou pour convertir au moins une certaine quantité du sulfure d'hydrogène dans les gaz d'échappement enrichis, ledit substrat filtrant possédant une extrémité d'entrée et une extrémité de sortie, l'extrémité d'entrée du substrat filtrant étant située en aval du premier monolithe faisant office de substrat dans la direction d'écoulement des gaz d'échappement ; et
(iii) un moyen pour enrichir les gaz d'échappement afin d'obtenir une composition de gaz d'échappement enrichie, de manière intermittente au cours d'une opération normale en brûlant un mélange pauvre pour éliminer le sulfate adsorbé sur le NAC ;
dans lequel le substrat filtrant possède une longueur qui s'étend depuis son extrémité d'entrée jusqu'à son extrémité de sortie, le composé efficace pour éliminer et/ou pour convertir au moins une certaine quantité du sulfure d'hydrogène étant disposé dans une zone de longueur essentiellement uniforme définie, à l'extrémité amont, par un point situé à un endroit qui correspond à plus de la moitié de la longueur du substrat filtrant mesurée à partir de l'extrémité d'entrée et définie, à l'extrémité aval, par l'extrémité de sortie du substrat filtrant lui-même, et dans lequel le composé efficace pour éliminer et/ou pour convertir au moins une certaine quantité du sulfure d'hydrogène est efficace pour éliminer et/ou pour convertir au moins une certaine quantité du sulfure d'hydrogène qui dérive de l'élimination du sulfate adsorbé sur le NAC.

2. Appareil selon la revendication 1, dans lequel un autre monolithe faisant office de substrat comprenant le composé efficace pour éliminer et/ou pour convertir au moins une certaine quantité du sulfure d'hydrogène est disposé en aval du substrat filtrant.

3. Appareil selon la revendication 1 ou 2, dans lequel le système d'échappement comprend un catalyseur d'oxydation disposé entre le moteur et le NAC.

4. Appareil selon la revendication 1, 2 ou 3, dans lequel le moyen pour enrichir les gaz d'échappement est choisi parmi le groupe constitué par :
(a) une unité de gestion du moteur configurée de manière intermittente pour permettre au moteur de rejeter des gaz d'échappement enrichis ;
(b) un injecteur pour injecter un agent de réduction dans les gaz d'échappement qui s'écoulent en étant transportés par le système d'échappement en aval du moteur ; et
(c) un catalyseur de reformage pour générer un mélange gazeux comprenant du H₂ et du CO à partir des gaz d'échappement et du carburant diesel.

5. Appareil selon l'une quelconque des revendications précédentes, dans lequel le composé d'élimination et/ou de conversion du sulfure d'hydrogène est choisi parmi le groupe constitué par du NiO, du CaO, du Fe₂O₃ et du BaO.

6. Appareil selon l'une quelconque des revendications précédentes, dans lequel le moyen d'enrichissement comprend un moyen pour régler la température du NAC au cours de l'enrichissement, afin d'éliminer et/ou de convertir le sulfate à partir du NAC.

7. Appareil selon la revendication 6, dans lequel le moyen d'enrichissement procure une composition riche nette de gaz d'échappement (lambda <1) et dans lequel le moyen de réglage de la température comprend un moyen pour régler de manière intermittente la composition des gaz d'échappement en direction du côté pauvre (lambda >1) lors de l'enrichissement des gaz d'échappement pour éliminer et/ou pour convertir le sulfate adsorbé sur le NAC.

8. Appareil selon la revendication 7, dans lequel le moyen pour régler de manière intermittente la composition des gaz d'échappement en direction du côté pauvre (lambda >1) règle soit le rapport air-carburant du moteur, soit l'injecteur pour injecter de l'air dans les gaz d'échappement en aval du moteur, ou les deux.

9. Appareil selon l'une quelconque des revendications précédentes, dans lequel le moyen d'enrichissement comprend un microprocesseur (ECU).

10. Appareil selon l'une quelconque des revendications précédentes, dans lequel le moteur à combustion interne à mélange pauvre est un moteur diesel, de manière facultative un moteur diesel de grosse cylindrée.

11. Véhicule comprenant un appareil selon l'une quelconque des revendications précédentes.

12. Procédé de désulfatation d'un catalyseur adsorbant les NOₓ (NAC) dans un système d'échappement d'un moteur à combustion interne à mélange pauvre, comprenant un premier monolithe faisant office de substrat comprenant un catalyseur adsorbant les NOₓ (NAC) ; et un filtre de la suie catalysée (CSF) comprenant un substrat filtrant comprenant un composant à base d'un métal du groupe du platine faisant office de catalyseur d'oxydation et un composé efficace pour éliminer et/ou pour convertir au moins une certaine quantité du sulfure d'hydrogène dans les gaz d'échappement enrichis, ledit substrat filtrant possédant une extrémité d'entrée et une extrémité de sortie, l'extrémité d'entrée du substrat filtrant étant située en aval du premier monolithe faisant office de substrat dans la direction d'écoulement des gaz d'échappement, dans lequel le substrat filtrant possède une longueur qui s'étend depuis son extrémité d'entrée jusqu'à son extrémité de sortie, le composé efficace pour éliminer et/ou pour convertir au moins une certaine quantité du sulfure d'hydrogène étant disposé dans une zone de longueur essentiellement uniforme définie, à l'extrémité amont, par un point situé à un endroit qui correspond à plus de la moitié de la longueur du substrat filtrant mesurée à partir de l'extrémité d'entrée et définie, à l'extrémité aval, par l'extrémité de sortie du substrat filtrant lui-même, ledit procédé comprenant les étapes dans lesquelles :
(i) on met le NAC sulfaté en contact avec les gaz d'échappement enrichis pendant un laps de temps suffisant et à une température suffisante pour obtenir la désorption de l'espèce sulfurée qui y est adsorbée, pour ainsi générer du sulfure d'hydrogène ; et
(ii) on met les gaz d'échappement contenant du sulfure d'hydrogène en contact avec le composé efficace pour éliminer et/ou pour convertir au moins une certaine quantité du sulfure d'hydrogène des gaz d'échappement enrichis.

13. Procédé selon la revendication 12, comprenant l'étape consistant à libérer le dioxyde de soufre du composé efficace pour éliminer et/ou pour convertir au moins une certaine quantité du sulfure d'hydrogène à partir des gaz d'échappement enrichis par la mise en contact par intermittence dudit composé avec un gaz d'échappement plus pauvre au cours de l'étape (i).
